# EUROPEAN PATENT APPLICATION

(11) **EP 4 764 402 A1**
(43) Date of publication of application: **24.06.2026**
(21) Application number: 24221848.5
(22) Date of filing: 19.12.2024
(51) Int. Cl.: G01C 15/00

(54) **SURVEYING INSTRUMENT WITH TWO INDEPENDENT FOCUS MECHANISMS**

(71) Applicant: Trimble Inc, Westminster CO 80021 (US)
(72) Inventor: GRAESSER, Christian, Westminster, 80021 (US); CLAESON, Jonas, Westminster, 80021 (US)
(74) Representative: AWA Sweden AB

(57) **Abstract**

A surveying instrument (100) is provided. The surveying instrument comprises a distance measurement unit (102) and a first optical receiver (108). The distance measurement unit comprises a transmitter (104) and a detector (106). The transmitter is configured to emit light (L1) via a first optical path (OP1). The detector is configured to receive light (L2) via the first optical path. The first optical receiver is adapted to receive light (L3) via a second optical path (OP2). The first optical path includes a front lens (110), a beam splitting unit (112), and at least one first focus adjusting element (113). The at least one first focus adjusting element is configured to adjust a focus of the distance measurement unit. The second optical path includes the front lens, the beam splitting unit and at least one second focus adjusting element (117). The at least one second focus adjusting element is configured to adjust a focus of the first optical receiver. The beam splitting unit is configured to split the first optical path from the second optical path. The transmitter and the detector share the first focus adjusting element as a common focus adjusting element.

## Description

### Technical field

The present disclosure relates generally to the field of surveying. More specifically, it relates to surveying instruments and methods for operating surveying instruments.

### Background

The art of surveying involves the determination of unknown positions, surfaces or volumes of objects using measurements of angles and distances. In order to make these measurements, a surveying instrument typically features a telescope or center unit with optical components or devices, such as an Electronic Distance Meter (EDM), a visual channel, a tracker, or a camera for visual light. A front lens of the center unit acts as a transmitter and receiver, gathering and projecting light from and to the external environment. In order to make precise measurements, the surveying instrument may comprise a movable focusing lens to adjust a focus of the telescope. For example, a visual channel or camera, may require a focusing lens arranged along the optical path to provide a sharp image of objects at different distances from the surveying instrument.

### Summary

One general aim of the present disclosure is to provide a surveying instrument with improved focusing. Specifically, there is a desire to be able to provide improved measurements in different conditions.

This and other objects are achieved by means of a surveying instrument and a method as defined in the appended independent claims. Other embodiments are defined by the dependent claims.

According to a first aspect of the present disclosure, a surveying instrument is provided. The surveying instrument comprises a distance measurement unit and a first optical receiver. The distance measurement unit comprises a transmitter and a detector. The transmitter is configured to emit light via a first optical path. The detector is configured to receive light via the first optical path. The first optical receiver is adapted to receive light via a second optical path. The first optical path includes a front lens, a beam splitting unit, and at least one first focus adjusting element. The at least one first focus adjusting element is configured to adjust a focus of the distance measurement unit. The second optical path includes the front lens, the beam splitting unit and at least one second focus adjusting element. The at least one second focus adjusting element is configured to adjust a focus of the first optical receiver. The beam splitting unit is configured to split the first optical path from the second optical path. The transmitter and the detector share the first focus adjusting element as a common focus adjusting element.

A surveying instrument is a piece of surveying equipment and may for example be used for mapping, construction or in engineering projects. A surveying instrument may for example be a total station, a geodetic device, or a theodolite. Such surveying instruments may be used to determine angles and/or distances from the surveying instrument to an object towards which the surveying instrument is aimed.

The distance measurement unit comprises a transmitter configured to emit light via the first optical path, through the front lens. Light emitted or detected by the surveying instrument may be referred to as a beam, or a light beam. For example, the transmitter may be a laser transmitter configured to emit a laser beam. The distance measurement unit further comprises a detector for detecting light received via the first optical path. The detector may be or comprise a photo detector. Specifically, the detector may detect light corresponding to the light emitted by the transmitter, such as light reflected by an external object back towards the surveying instrument. The external object may be or comprise a point or object of interest. The point of interest may be a point to be positioned or measured using the surveying instrument. Thus, the point of interest may be a point towards which the surveying instrument is aimed. In other words, the surveying interest may be positioned such that an optical axis of the surveying instrument intersects the point or object of interest. The optical axis may also be referred to as a sighting axis. The distance measurement unit may for example be an electronic distance measurement (EDM) module for measuring a distance to an object (or point of interest) based on the emitted and detected light.

The first focus adjusting element is arranged along the first optical path, i.e., along the optical path of the distance measurement unit. Adjusting the focus may be seen as adjusting a focal point and/or a focal length. The first focus adjusting element may be arranged to adjust the focal point of the distance measurement unit. A focused light beam spot may be significantly smaller than a non-focused (collimated) spot. By adjusting the first focus adjusting element, a diameter or footprint of the emitted light beam at a surface or object of interest may be controlled and adapted to surveying conditions.

The (first) optical receiver is configured to receive light from the front lens via the second optical path. The optical receiver may for example receive light for relaying, generating, or detecting a visual representation of a field of view of the surveying instrument. The surveying instrument may be positioned and aimed such that an object or point of interest is within the field of view of the surveying instrument. The second focus adjusting element is arranged along the second optical path, i.e., along the optical path of the first optical receiver. The second focus adjusting element can adjust a focus of the first optical receiver. The second focus adjusting element may be arranged along the second optical path to adjust the focal point of the optical receiver. By adjusting the second focus adjusting element, the optical receiver may provide sharp, focused, visual representations of objects within the field of view of the surveying instrument at different distances from the surveying instrument.

The beam splitting unit merges and divides light beams. Specifically, the beam splitting unit merges and divides the first and second optical path. The beam splitting unit may split light entering the front lens into the first optical path, towards the distance measurement unit, and the second optical path, towards the first optical receiver. For example, the beam splitting unit may split incoming light entering the front lens into the separate optical paths based on a wavelength or a polarization of the incoming light. The beam splitting unit may be configured to transmit a first portion of the incoming light and deflect a second portion of the incoming light. The beam splitting unit may comprise at least one beam splitter. Examples of beam splitters include dichroic beam splitters, beam splitters using a patterned or partly reflective coating, and polarization-based beam splitters.

The present surveying instrument provides separate focus adjusting elements for the first optical path and the second optical path. The respective focus adjusting elements may, for example, be arranged between the beam splitting unit and the distance measurement unit and between the beam splitting unit and the first optical receiver.

Surveying instruments may be used to determine positions of, or measure, different types of objects or points of interest. Such objects or points may be stationary or mobile and they may have different optical (reflective) properties. Thus, depending on the type of object or point of interest, different focus settings may be preferred. Further, surrounding conditions, such as surrounding light, temperature, and air turbulence, may affect the measurement conditions, and the ideal focus settings for the distance measurement unit and the optical receiver.

The first focus adjusting element may allow fine-tuning a divergence of the light emitted by the distance measurement unit. For example, the divergence of the emitted light may be fine-tuned in a range between 0.015 mrad and 30 mrad. The transmitter and the detector of the distance measurement unit share the first focus adjusting element as a common focus adjusting element. Thus, the first focus adjusting element may simultaneously shift the field of view of the detector to correspond to the transmitter divergence. The field of view of the detector may also be referred to as reception angle of the detector. The adjustment of focus and divergence is therefore made synchronously for the transmitter and the detector.

Further, by using a shared focus adjusting element for the transmitter and detector, any undesirable lateral movement of the focus adjusting element will cause the light to shift through the front lens by the same amount for both transmitter and detector. Consequently, the relative positioning (or alignment) of the transmitter and detector in the focal plane remains unchanged. This may ensure that light reflected by the target continues to be accurately focused on the receiver, preventing loss of signal.

In an optical system where the transmitter and detector use separate elements (e.g., lenses) for divergence and focus control, there is a higher risk that a movement of one of the elements (for example due to a temperature change) misaligns the transmitter to the detector, resulting in a measurement signal loss.

The common focus adjusting element may further provide that, once the transmitter and the detector have been aligned during manufacturing, the focal points of both the transmitter and detector will closely track each other. When the focus of light travelling along the first optical path is adjusted, via the first focus adjusting element, the focus for both the transmitter and detector channels will change identically. Consequently, this alignment may maximize the received signal strength, which may be crucial when measuring, e.g., dark, scattering targets at long distances, particularly in the presence of intense ambient light, such as sunlight.

Focusing the transmitter light may improve a spatial transverse measurement resolution. It can for example be used for accurately measuring the distance to a small object. When the detector is focused, the field of view, or reception angle, of the detector may become similar to a spot size of the transmitter light. A small field of view may limit the collection/detection of ambient light. Thus, by simultaneously adjusting the transmitter and detector focus, a signal to noise ratio may be increased. Especially when measuring a scattering target, i.e., measuring a distance to a scattering surface, the level of the optical signal may rely significantly on precisely focusing both the transmitter and receiver. The common focus adjusting element described in the present disclosure may be continuously adjusted to adapt the focus in order to achieve a stronger signal. This adjustment may lead to a higher signal to noise ratio, better measurement accuracy, shorter measurement times, and a reduced influence of ambient light noise.

Further, a system with a fine-tuning focusing element, e.g., the first focus adjusting element, may enable focusing at any distance, and thereby minimizing a size of the distance measurement spot independently of the distance to the target. A smaller spot size may allow for measurements within a highly precise and well-defined area. A larger spot size may make measurements less dependent on local surface structures, such as local tilts.

Further, the surveying instrument of the present disclosure may facilitate manufacture of the surveying instrument. Specifically, by incorporating focus adjusting elements, for the different channels (different optical paths), the need for focus adjustment during manufacture may be reduced. In an optical system without an adjustable focusing element the focal adjustment must be made during manufacturing. The adjustment is necessary in order to compensate for variations (tolerances) of the characteristics in optical elements, such as lenses, and mechanics. In an optical system with a focus adjusting element, which may be used to adjust the focus during operation, there is a reduced need for precise adjustment of the position of the image plane relative to a transmitter, a detector, or a receiver during manufacturing.

In an optical system with two channels, i.e., distance measurement channel and optical receiver channel, sharing the same focus adjusting element, one of the channels must be focused during manufacturing so that the focus plane of the distance measurement unit and the optical receiver matches one another. In the present surveying instrument, including two independent focus adjusting elements, neither of the two channels needs to be focused during manufacturing, as the distance measurement unit and the first optical receiver may be focused independently during operation.

According to some embodiments, the first optical path and the second optical path may be coaxial between the front lens and the beam splitting unit.

In embodiments in which the first optical path and the second optical path are coaxial between the front lens and the beam splitting unit, the distance measurement unit and the first optical receiver may emit and receive light along a shared optical axis through the front lens, such as an optical axis of the surveying instrument.

According to some embodiments, the first focus adjusting element may comprise a first movable optical component arranged between the distance measurement unit and the beam splitting unit.

According to some embodiments, the second focus adjusting element may comprise a second movable optical component arranged between the first optical receiver and the beam splitting unit.

The first movable optical component may be positioned along the first optical path. The first movable optical component may be arranged to move, e.g., slide, along the first optical path to adjust a focus or focal point of the distance measurement unit and the first optical path. For example, a position of the first movable optical component along the first optical path may be continuously adjustable in a first range.

The second movable optical component may be positioned along the second optical path. The second movable optical component may be arranged to move, e.g., slide, along the second optical path to alter a focus or focal point of the first optical receiver and the second optical path. For example, a position of the second movable optical component along the second optical path may be continuously adjustable in a second range.

The position of the first movable optical component and the second movable optical component may be individually adjusted. Alternatively, or additionally, the position of the first and second movable optical components may be jointly adjusted. For example, in a first mode or setting, the first and second movable optical components may be separately adjusted, and in a second mode or setting, the first and second movable optical components may be jointly adjusted.

The first movable optical component may be a lens or a mirror. The second movable optical component may be a lens or a mirror. The first movable optical component may be different from the second movable optical component. Having a movable optical component may allow for increased accuracy for adjustments to focus. A movable optical component may allow for a more compact and energy efficient system. Moving a mirror along an optical path may adjust the length of the optical path. Moving a lens and/or a mirror along an optical path may shift the position of the focal point.

According to some embodiments, the first focus adjusting element may comprise a first movable element, configured to move the distance measurement unit to adjust a length of the first optical path.

According to some embodiments the second focus adjusting element may comprise a second movable element, configured to move the first optical receiver to adjust a length of the second optical path.

Adjusting a position of, i.e., moving, the distance measurement unit to elongate or shorten the first optical path may change the optical distance between the distance measurement unit and the front lens. Thus, adjusting the position of the distance measurement unit to elongate or shorten the first optical path may vary a position outside the surveying instrument, along the optical axis, at which light emitted by the transmitter of the distance measurement unit is focused. Adjusting a position of, i.e., moving, the first optical receiver to elongate or shorten the second optical path may change the optical distance between the first optical receiver and the front lens. Thus, adjusting the position of the first optical receiver to elongate or shorten the first optical path may vary a position outside the surveying instrument, along the optical axis, from which light received by the optical receiver is in focus.

The first and/or second movable element may comprise an actuator that creates motion or mechanical force from electricity. The first movable element may comprise a sliding mechanism configured to move the distance measurement unit in a back and forth motion to elongate or shorten the first optical path. The second movable element may comprise a sliding mechanism configured to move the first optical receiver in a back and forth motion to elongate or shorten the second optical path. Arranging a distance measurement unit or a first optical receiver to be movable, e.g., slidable, may allow for cheaper, simpler, and more compact design and manufacture, at least since it may result in fewer moving parts. A movable distance measurement unit or a receiver may allow for more precise adjustment of the focus of the light that is transmitted and/or received.

According to some embodiments, the first focus adjusting element may comprise a first focus adjustable lens arranged between the distance measurement unit and the beam splitting unit.

According to some embodiments, the second focus adjusting element may comprise a second focus adjustable lens arranged between the first optical receiver and the beam splitting unit.

A focus adjustable lens may have an adjustable focal length, or an adjustable optical power. For example, some focus adjustable lenses may have an adjustable shape. The focal length of such a focus adjustable lens may be altered by altering the shape of the lens, e.g., by altering the curvature of the lens. Thus, the focal length of a focus adjustable lens may be changed without moving the lens. The focal length of the focus adjustable lens may be controlled by electrical currents, temperature changes, and/or electrical fields. A focus adjustable lens may for example be a liquid lens.

Utilizing an optical element with an adjustable focal length may allow for faster adjustments, more compact system designs, and increased robustness of the system.

According to some embodiments, the first focus adjusting element may comprise a first phase array arranged between the distance measurement unit and the beam splitting unit.

According to some embodiments, the second focus adjusting element may comprise a second phase array arranged between the first optical receiver and the beam splitting unit.

A phase array may be configured to adjust a focus by adjusting the phase of light transmitted or reflected by the phase array. A phase array may comprise a two-dimensional array of elements, or pixels, wherein the optical phase of the transmitted light can be controlled individually for each element. One or more elements in a phase array may be a spatial light modulator (SLM). A reflective phase array may be used to fold the path of light by redirecting the light, for example, by 20, 45, or 90 degrees. A translucent phase array may be used as a lens. A first phase array may be arranged along, and adjust the focus of, the first optical path. A second phase array may be arranged along, and adjust the focus of, the second optical path.

Using a phase array may allow for faster focus adjustments, more compact system designs, and increased robustness of the system.

It will be appreciated that a combination of more than one first focus adjusting element may be included in the first optical path. For example, the first optical path may comprise any combination of a first movable element, a first movable optical component, a first focus adjustable lens, and a first phase array.

Similarly, a combination of more than one second focus adjusting element may be included in the second optical path. For example, the second optical path may comprise any combination of a second movable element, a second movable optical component, a second focus adjustable lens, and a second phase array.

According to some embodiments, the first focus adjusting element and the second focus adjusting element may be separately adjustable.

Thus, a focal point of the distance measurement unit and a focal point of the first optical receiver may be separately adjusted to optimize measurement conditions for distance measurements and optical measurements. As previously mentioned, the measurement conditions and the target (object/point) of interest may affect the optimal focus settings for the distance measurement unit and the optical receiver. In certain situations, the optimal focus setting of the distance measurement unit may differ from that of the optical receiver. Separately, or independently, adjusting the first and second focus adjusting element may facilitate optimizing the focus of the distance measurement unit and the focus of the first optical receiver.

For example, the first focus adjusting element may provide a continuously adjustable focus in a first range. The second focus adjusting element may provide a continuously adjustable focus in a second range. The first focus adjusting element may be adjusted without affecting the second focus adjusting element, and vice versa.

Alternatively, or additionally, the first and second focus adjusting elements may be jointly adjusted. For example, in a first mode or setting, the first and second focus adjusting elements may be separately adjusted, and in a second mode or setting, the first and second focus adjusting elements may be jointly adjusted.

According to some embodiments, the transmitter may be configured to emit light via the first optical path onto an object. The detector may be configured to receive a return signal of the emitted light reflected by the object. The surveying instrument may further comprise a processing unit configured to determine a distance between the surveying instrument and the object based on the emitted light and the received return signal.

For example, the processing unit, which may also be referred to as a processor, may form part of the distance measurement unit, such as an electronic distance measurement (EDM) module, together with the transmitter and the detector. The processor may be a separate unit or device in communication with the distance measurement unit. For example, the processor may form part of a controller or control unit of the surveying instrument.

According to some embodiments, the first optical receiver may comprise an eyepiece, an imaging device, or a tracker unit.

The eyepiece may comprise a reticle for direct observation of the field of view of the surveying instrument. A user or operator of the surveying instrument may use the eyepiece for aiming the surveying instrument.

The imaging device may comprise sensor for capturing visual data. The imaging device may send captured visual data to processor or computing device. The imaging device may be in communication with a display, such as a display of the surveying instrument, or a display of an external device. The imaging device may transmit data based on received light to the display. For example, the display may display a live stream from the imaging device.

A tracker unit may be configured to identify and track an object, such as a target, within the field of view of the surveying instrument. For example, the tracker unit may be configured capture a series of images of the field of view of the surveying instrument, and to identify the target in the series of images.

According to some embodiments, the surveying instrument may further comprise a second optical receiver adapted to receive light via a third optical path. The third optical path may include the beam splitting unit and the front lens. The beam splitting unit may be configured to split the third optical path from the first optical path and/or the second optical path.

In other words, the beam splitting unit may be configured to split the first, second and third optical paths from one-another. The beam splitting unit may comprise one or more beam splitters. For example, the beam splitting unit may comprise a first beam splitter, for separating one of the first, second and third optical paths from the other two, and a second beam splitter for separating the remaining two optical paths from each other.

The second optical receiver may comprise an eyepiece, an imaging device, or a tracker unit.

According to some embodiments, the surveying instrument may further comprise a control unit configured to control the first focus adjusting element.

According to some embodiments, the surveying instrument may further comprise a control unit configured to control the second focus adjusting element.

The control unit may be configured to control the first focus adjusting element and the second focus adjusting element.

The control unit may send a control signal that adjusts the focus of the first focus adjusting element and/or the second focus adjusting element. The control signal may for example control the focus adjusting element to alter, for example, a refractive index, phase, shape, or other optical characteristic of the focus adjusting element or a position of the focus adjusting element. A control signal may be an electric signal/electric current that may alter a refraction index locally, for example, by local electrical currents, by local temperature gradients, and/or by a local electric field.

The control unit may, for example, control an actuator configured to move the first movable optical components along the first optical path. The control unit may, for example, control an actuator configured to move the second movable optical component along the second optical path.

The control unit may control the first movable element to move the distance measurement unit to adjust the length of the first optical path. The control unit may control the second movable element to move the first optical receiver to adjust a length of the second optical path.

The control unit may control a focal point of the first focus adjustable lens. The control unit may control a focal point of the second focus adjustable lens. For example, the control unit may control a controllable optical characteristic of the first focus adjustable lens and/or of the second focus adjustable lens.

By controlling the first focus adjusting element, a focus or focal point of the distance measurement unit and the first optical path may be controlled. The first focus adjusting element may be controllable to focus the light emitted by the transmitter at infinity. When focused at infinity, a light beam emitted by the transmitter may be a collimated light beam. The first focus adjusting element may be controllable to control a size of a light spot or dot, of the emitted light, at an object.

Whether to focus the light of the distance measurement unit at the target or not may depend on the type of target to which the distance is to be measured. In a more focused light, such as a light beam or pulse having a smaller diameter or cross-section, the energy of the light is focused in a smaller area.

Thus, if the light is correctly reflected back towards the surveying instrument, a more focused light pulse or light beam may provide a larger signal strength for the detector to detect. However, a more focused light, e.g., a smaller beam diameter, may be more difficult to correctly aim toward a specific target. Further, depending on the optical properties of the target, including for example surface roughness, the light with a smaller beam diameter may not be reflected back toward the surveying instrument.

A less focused light, i.e., a wider light beam or pulse, such as a collimated or diverging laser, may on the other hand have a larger diameter or cross-section at the target. Thus, a less focused light, e.g., a wider light beam, may facilitate aiming the surveying instrument towards the target. However, less focused light may, depending on the type of target, lead to a reduction in signal strength, or an increase in noise.

By controlling the second focus adjusting element, a focus or focal point of the first optical receiver and the second optical path may be controlled. Some measurements may be made, or information gathered, using an out of focus first optical receiver. However, for e.g., an eyepiece, an imaging device, or a tracking unit, it may be preferred to keep a focal plane of the first optical receiver at a target or area of interest, to achieve a sharp image of the target or area of interest. Alternatively, it may be of interest to focus an eyepiece, an imaging device, or a tracking unit "at infinity", to include objects at different distances in the field of view.

According to some embodiments, the control unit may be configured to control the first focus adjusting element based on an input from the distance measurement unit.

According to some embodiments, the control unit may be configured to control the second focus adjusting element based on an input from the distance measurement unit.

The distance measurement unit may measure a distance to a target without the focal point of the distance measurement unit being at the target. Thus, an initial distance measurement may be used to control the first focus adjusting element, to focus the distance measurement unit on the target.

Further, based on a distance measurement from the distance measurement unit, the second focus adjusting element may be controlled to align a focal plane of the first optical receiver with the target or area of interest.

According to some embodiments, the first optical receiver may be an imaging device. The control unit may be configured to control the first focus adjusting element based on an input from the imaging device.

The control unit may be configured to control the second focus adjusting element based on an input from the imaging device.

For example, the control unit may control the first focus adjusting element based on a sharpness or a contrast measure of an image captured by the imaging device. For example, sharpness of the image may be determined based on a spatial frequency analysis of the image content. A higher content of high frequencies may correspond to a sharp image.

The control unit may control the second focus adjusting element based on a quality measure, such as a sharpness or a contrast measure, in an image captured by the imaging device. For example, the second focus adjusting element may be controlled in a feedback loop, based on the input from the imaging device.

In some surveying applications, the surveying instrument may be used to determine a distance to a surveying target. The surveying target may be configured to reflect a light beam or a light pulse back towards the surveying instrument. For example, the surveying target may comprise a corner cube prism. Such prisms are specifically manufactured to reflect incident light back in the direction from which it came. A corner cube prism may therefore return a strong signal to the surveying instrument. However, such prisms may be relatively small, with a diameter of, e.g., 5 mm, 12 mm, 25 mm, or 50 mm. The surveying target may comprise a plurality of corner cube prisms. For example, the surveying target may comprise eight corner cube prisms.

In some surveying applications, the surveying instrument may be used to make measurements of a distant surface or an object. For example, the surveying instrument may determine a distance to the object or surface, and or generate images of the object or surface. For example, the surveying instrument may determine a distance to a plurality of points, based on which a point cloud, or a surface profile may be generated. Real-world objects or surfaces are often not optimized for reflecting light. Instead, incident light may be scattered in different directions, including a direction back toward the surveying instrument. Such targets (objects, surfaces) may return a weaker signal to the surveying instrument.

In turbulent conditions, such as during sunny or windy weather, the light may deviate from its intended path. This may be referred to as optical turbulence. Turbulent conditions may cause the light beam or light pulse to wander randomly and occasionally miss the prism target. For example, a volume of cooler air surrounding a hot object or surface, such as a road surface, may be subject to a gradient or varying refractive index, causing so-called "heat shimmer". This variation in the refractive index may cause the light to diverge from the intended path. Narrow or focused light beams may be particularly sensitive to turbulent conditions. Further, prism targets mounted on a rod, and moved by a surveyor, may be challenging for the surveying instrument to track accurately. This can lead to intermittent signal loss from the prism target by the light.

Thus, in measurement scenarios characterized by significant air turbulence, or unstable or moving targets, it can be beneficial to increase the divergence of the light, causing it to over-illuminate the target. This may ensure that the target remains illuminated, despite the turbulence, which may shift the path of the light beam or light pulse. A drawback of a less focused light, e.g., an expanded beam, is the loss of signal strength, as the energy is diverged over a wider angular area. In conditions free from turbulence, it may be more advantageous to decrease the divergence of the light or light beam, focusing the energy more narrowly and efficiently.

According to some embodiments, the control unit may be further configured to determine a degree of optical turbulence based on an input received from the first optical receiver. The control unit may be configured to control the first focus adjusting element based on the determined degree of optical turbulence.

The control unit may be configured to control the second focus adjusting element based on the determined degree of optical turbulence.

For example, the control unit, or processor, may determine a degree of turbulence based on an input received from an imaging device. An algorithm may be used to detect whether features in a series of detected images remain stationary or exhibit movement due to, e.g., heat shimmer. The first focus adjusting element or the second focus adjusting element may be automatically optimized for the amount of turbulence for each measurement situation.

When an optical system undergoes thermal variations, such as heating or cooling, the optical focus plane shifts relative to the image sensor plane. The magnitude of this shift depends on the thermal expansion coefficients of the optomechanical components and lens materials, as well as the temperature dependence of the refractive indices of the lenses. In an optical system comprising more than one optical channel, such as a surveying system, the optical components of the different channels may react differently from each other, resulting in the focuses of the channels to exhibit different offsets due to thermal variations. In the context of the present instrument, the first optical path of the distance measurement unit and the second optical path of the first optical receiver may experience different shifts in their respective focal planes due to the same of different temperature changes. With a single focusing lens, it would be difficult to simultaneously compensate for both thermal shifts, especially under varying temperature conditions. However, with the first and the second focus adjusting elements of the present disclosure, independent adjustment may be enabled, allowing for precise focus of both channels even when subjected to temperature fluctuations.

According to some embodiments, the control unit may further comprise a temperature sensor. The control unit may be configured to control the first focus adjusting element based on an input received from the temperature sensor. The control unit may be configured to control the second focus adjusting element based on an input received from the temperature sensor.

The control unit may for example comprise one or more temperature sensors. The temperature sensor(s) may be arranged within and/or outside the surveying instrument.

A focus shift of the first optical path and/or second optical path due to different temperatures may be known, for example based on an initial calibration.

According to a second aspect of the present disclosure, a method for controlling a surveying instrument of the first aspect is provided. The method comprises receiving a first input from at least one of the distance measurement unit, the first optical receiver, a temperature sensor, and a user interface device. The method further comprises controlling the first focus adjusting element and/or the second focus adjusting element based on the first input.

According to some embodiments, the method may further comprise determining a degree of turbulence or a parameter related to temperature based on the first input. The method may further comprise controlling the first focus adjusting element based on the determined degree of turbulence or the parameter related to temperature. The method may further comprise controlling the second focus adjusting element based on the determined degree of turbulence or the parameter related to temperature.

According to some embodiments, the method may further comprise controlling the second focus adjusting element based on a second input received from at least one of the distance measurement unit, the first optical receiver, the temperature sensor, and the user interface device.

The second input may be the same or equivalent to the first input. For example, the method may further comprise determining a degree of turbulence or a parameter related to temperature based on the second input and controlling the second focus adjusting element based on the determined degree of turbulence or the parameter related to temperature.

It is noted that other embodiments using all possible combinations of features recited in the above-described embodiments may be envisaged. Thus, the present disclosure also relates to all possible combinations of features mentioned herein.

### Brief description of drawings

Exemplifying embodiments will now be described in more detail, with reference to the following appended drawings:
Figure 1 is a schematic illustration of a surveying instrument, in accordance with some embodiments;
Figure 2 is an illustration of a surveying operation using a surveying instrument;
Figure 3 is an illustration of a surveying instrument, in accordance with some embodiments, and a target;
Figures 4a and 4b are illustrations of a surveying instrument, in accordance with some embodiments, and a target surface;
Figure 5 is a schematic illustration of a surveying instrument, in accordance with some embodiments;
Figure 6 is a schematic illustration of a surveying instrument, in accordance with some embodiments; and
Figure 7 is a schematic illustration of a surveying instrument, in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

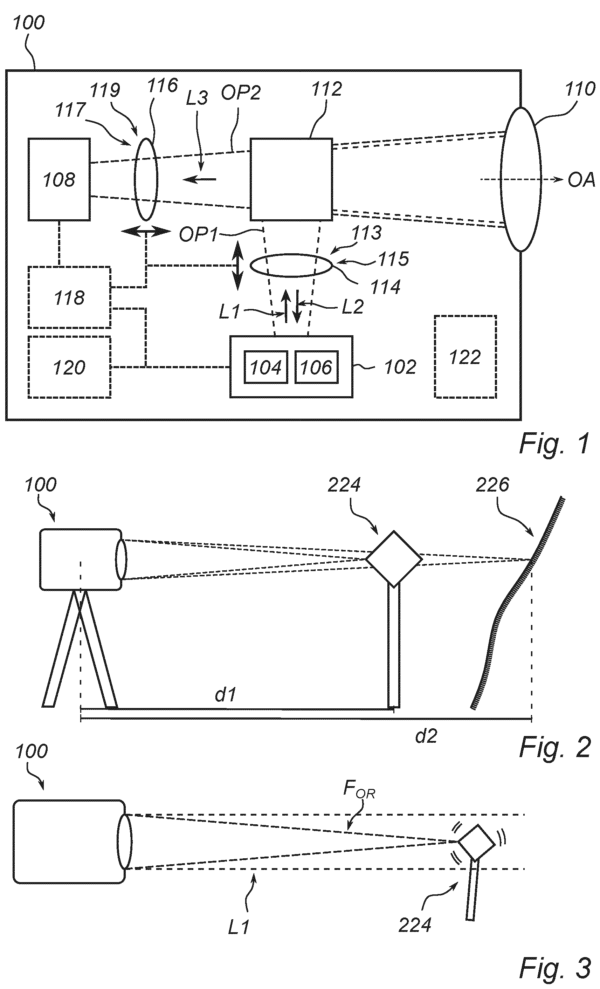

With reference to Figure 1, a surveying instrument 100, in accordance with some embodiments, will be described. Figure 1 illustrates at least a portion of a surveying instrument 100. Specifically, in Figure 1, a telescope or center unit of a surveying instrument 100 is illustrated. It will be appreciated that the surveying instrument 100 may further comprise other features, such as an alidade, a tribrach, or a tripod.

The surveying instrument 100 comprises a front lens 110 defining an optical axis OA of the surveying instrument 100. During operation, the surveying instrument 100 may be aimed at an object of interest, such as a target 224 or a surface 226 illustrated in Figure 2. In other words, the optical axis OA of the surveying instrument 100 may, during operation, point toward an object of interest, against which or toward which measurements may be made.

For such measurements, the surveying instrument 100 comprises a distance measurement unit 102. The distance measurement unit 102 comprises a transmitter 104 configured to emit light L1. such as a first light beam or a first light pulse, via a first optical path OP1. The first optical path OP1 comprises a beam splitting unit 112, configured to direct the light L1 toward the front lens 110, such that the light L1 is emitted along the optical axis OA of the surveying instrument 100. The distance measurement unit 102 further comprises a detector 106. The detector 106 is configured to receive and detect light L2, such as a second light beam or a second light pulse, via the first optical path OP1. In other words, light L2 entering the front lens 110, along the optical axis OA, is guided by the beam splitting unit 112 toward the detector 106 of the distance measurement unit 102. During operation, the transmitter 104 may emit light L1, through the first optical path OP1, and through the front lens 110 along the optical axis OA. The light L1 may reach an object (e.g., target 224 or surface 226 illustrated in Figure 2) and at least a part of the emitted light L1 may be reflected back, by the object, toward the surveying instrument 100 as the (second) light L2. The light may enter the front lens and follow the first optical path to the detector 106. Based on the emitted light L1 and the received light L2, the distance measurement unit 102 may determine a distance between the surveying instrument 100 and the object. In some embodiments, the surveying instrument 100 may further comprise a processing unit 120 configured to determine a distance between the surveying instrument 100 and the object based on the light L2 received by the detector 106 and the light L1 emitted by the transmitter 104.

The surveying instrument 100 further comprises a first optical receiver 108, configured to receive light L3 via a second optical path OP2. The second optical path OP2 comprises the front lens 110 and the beam splitting unit 112. In other words, the beam splitting unit 112 is configured to direct light L3 entering the front lens 110 toward the first optical receiver 108. The beam splitting unit 112 is therefore configured to split the first optical path OP1 from the second optical path OP2. The first optical path OP1 and the second optical path OP2 are coaxial between the front lens 110 and the beam splitting unit 112. The optical receiver 108 may for example comprise one of an eyepiece, an imaging device, or a tracker unit.

The first optical path OP1 comprises a first focus adjusting element 113. In the embodiment illustrated in Figure 1, the first focus adjusting element 113 is a first movable optical component 115. Specifically, the first movable optical component 115 is a first focusing lens 114. The focusing lens 114 is arranged between the beam splitting unit 112 and the distance measurement unit 102. The first focusing lens 114 is a shared/common focusing lens 114 for the transmitter 104 and the detector 106 of the distance measurement unit 102. The first focusing lens 114 is movably arranged along the first optical path OP1, to adjust a focus or a focal point of the transmitter 104 and the detector 106.

The second optical path OP2 comprises a second focus adjusting element 117. In the embodiment illustrated in Figure 1, the second focus adjusting element 117 is a second movable optical component 119. Specifically, the second movable optical component 119 is a second focusing lens 116. The second focusing lens 116 is arranged between the beam splitting unit 112 and the first optical receiver 108. The second focusing lens 116 is moveably arranged along the second optical path OP2 to adjust a focus or a focal point of the first optical receiver 108.

The first focusing lens 114 and the second focusing lens 116 may be separately, or independently, adjustable, to independently adjust the focus of the distance measurement unit 102 and the optical receiver 108.

As is illustrated in Figure 1, the surveying instrument 100 may further comprise a control unit 118. The control unit 118 is configured to control the first focus adjusting element 113 to adjust a focus of the distance measurement unit. In the context of Figure 1, the control unit 118 is configured to control the first focus adjusting element 113 by controlling a position of the first focusing lens 114 along the first optical path OP1. The control unit 118 may be configured to control the second focus adjusting element 117 to adjust a focus of the first optical receiver 108. In the context of Figure 1, the control unit 118 is configured to control the second focus adjusting element 117 by controlling a position of the second focusing lens 116 along the second optical path OP2. The control unit 118 may control the first focus adjusting element 113 and/or the second focus adjusting element 117 based on an input from the distance measurement unit 102. For example, the control unit 118 may control the position of the first focusing lens 114 and/or the second focusing lens 116 based on a distance to an object, measured by the distance measurement unit 102. Alternatively, or additionally, the control unit 118 may control the focus of the first focus adjusting element 113and/or the focus of the second focus adjusting element 117 based on an input from the first optical receiver 108. For example, the control unit 118 may control the position of the first focusing lens 114 and/or the second focusing lens 116 based on a sharpness or blurriness of an image generated, e.g., by an imaging device or a tracker unit of the first optical receiver 108. Moreover, the surveying instrument 100 may comprise a temperature sensor 122. The temperature sensor 122 may be configured to generate an output indicative of a temperature inside or outside of the surveying instrument 100. The control unit 118 may control the focus of the first focus adjusting element 113 and/or the focus of the second focus adjusting element 117 based on an input from the temperature sensor 122, such as an input indicative of a temperature inside or outside the surveying instrument 100.

An input from the distance measurement unit 102, from the optical receiver 108, or from the temperature sensor 122 may be processed by the processor 120. The processor may provide the input to the control unit 118. Alternatively, the processor 120 may form part of the control unit 118, or vice versa.

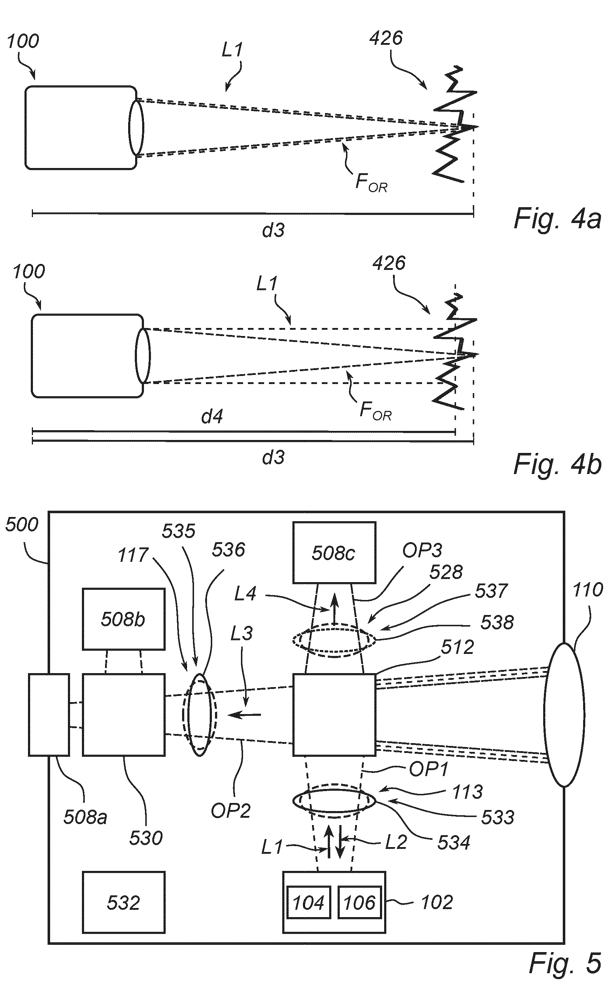

The control unit 118 or the processor 120 may for example be configured to execute a method according to the second aspect of the present disclosure. The method comprises receiving a first input from at least one of the distance measurement unit 102, the first optical receiver 108, the temperature sensor 122, and a user interface device 532, illustrated in Figure 5. The method further comprises controlling a first focus adjusting element 113, such as by controlling a position of the first focusing lens 114 along the first optical path OP1 based on the first input. For example, the method may comprise determining a degree of turbulence or a parameter related to temperature based on the first input and controlling the position of the first focusing lens 116 along the first optical path OP1 based on the determined degree of turbulence, or the parameter related to temperature.

The method may further comprise controlling a second focus adjusting element 117, such as by controlling a position of the second focusing lens 116 based on a second input received from at least one of the distance measurement unit 102, the first optical receiver 108, the temperature sensor 122, and the user interface device 532. The second input may be the same as the first input, or different from the first input. For example, the position of the second focusing lens 116 may be controlled based on the determined degree of turbulence or the parameter related to temperature.

With further reference to Figure 2, an example surveying operation will be described. In Figure 2, the surveying instrument 100 is arranged on a tripod. Alternatively, the surveying instrument 100 may be hand held, arranged on a vehicle or on another structure. As mentioned above, during operation, the surveying instrument 100 is aimed at an object or surface of interest, such as a surveying target 224 or a surface 226 of, e.g., a natural structure or a building. Using the distance measurement unit 102, the surveying instrument 100 may determine a distance d1, d2 between the surveying instrument 100 and the object (e.g., the target 224) or surface 226.

If the surveying instrument 100 is placed at a known position, for example in a local or global reference frame, the surveying instrument 100 may be used to determine a position of the object (e.g., the target 224) or the surface 226. Specifically, by knowing the position and the orientation of the surveying instrument 100, as well as the measured distance d1, d2, the point at which the light L1 is reflected may be accurately positioned. Surveying instruments 100 may be used for positioning or scanning objects or targets at distances up to 6000m or more.

The target 224 is a representation of a surveying target 224. The target 224 may, for example, be mounted on a rod, as in Figure 2. During operation, an operator may position the rod at one or more points of interest within the field of view of the surveying instrument 100, to measure distances from the surveying instrument 100 to the point(s) of interest, or to accurately measure or determine positions of the point(s) of interest. In another example, the target 224 may be mounted on a vehicle (not depicted). The surveying instrument 100 may be aimed at, e.g., a work site, and may track a position of the vehicle within the worksite based on tracking the position of the target 224.

The target 224 may comprise a corner cube prism. Upon striking a corner cube prism, a light ray, e.g., light L1, is retroreflected back in the direction from which it originated. This property of corner cube prisms assures that large amount of the reflected light signal is directed back to the receiver in the surveying instrument 100. Thus, measurement range and accuracy may be enhanced.

The surveying instrument 100 may also be aimed at a surface of, e.g., a manufactured or natural structure 226. Such surfaces 226 may be rough and non-specular surfaces, and scatter light in various directions. For such surfaces 226, the reflected optical power that reaches the surveying instrument 100 is significantly weaker compared to measurements on prism targets due to the surface's 226 scattering characteristics.

The focus of a first focus adjusting element 113, and/or a second focus adjusting element 117 may be adjusted based on the type of surveying operation. More specifically, the focus of the distance measurement unit 102 and of the optical receiver 108, corresponding to positions of the first focusing lens 114 and the second focusing lens 116 along the first and second optical paths OP1, OP2, may be adjusted based on the type of surveying operation.

Figure 3 illustrates a surveying operation using a surveying instrument 100 and a target 224. Prism targets, due to their reflective characteristics, offer superior accuracy compared to direct-reflection targets, such as natural surfaces. They are commonly mounted on surveyor rods, allowing for easy movement and positioning for various measurement applications. However, an operator carrying the surveyor rod may not always have a steady hand, and the rod may, e.g., be subject to wind, causing the target 224 to move or wobble.

Further, the target 224 may be arranged on a moving device or vehicle, such as a bulldozer at a work site or a target rod. It may therefore experience rapid, abrupt movements, causing the prism to move out of the transmitter illumination zone, resulting in signal loss until the surveying instrument is realigned with the target 224.

By slightly adjusting the first focusing lens 114, the light L1, can intentionally be made divergent, or parallel, significantly widening its illuminating diameter at the prism target 224. This ensures that even in turbulent conditions or when the target 224 is moved erratically, the target 224 will remain within the light's L1, or the light beam's enlarged coverage area, eliminating intermittent signal loss. The divergence of the light may be adjusted to match a "region of wobble" of the target 224, ensuring that the target remains illuminated despite some erratic movements. Since the light L1 is focused independently from the focus F_{OR} of the optical receiver, it is possible to let the optical receiver stay focused on the target 224. By finetuning the position of the first focusing lens 114, the divergence of the light L1 can be set to match the "region of wobble" independently of distance to the prism.

In a target 224, a plurality of corner cube prisms may commonly be arranged in a circular horizontal arrangement where typically two or more prisms are visible from the surveying instrument 100. Depending on the width of the light L1, a varying number of prisms may return the signal and contribute to the range measurement. When a single prism is illuminated, the distance measurement unit may measure the distance to that specific prism. If multiple prisms are illuminated, the unit or system may calculate the distance based on a weighted average of the prisms. In systems that allow for fine-tuning the divergence of the light, the number of illuminated prisms can be more precisely controlled. Therefore, such systems may offer better measurement accuracy compared to those with fixed divergence settings.

Figures 4a and 4b illustrate a surveying operation using a surveying instrument 100 aimed at a rough surface 426. In Figure 4a, the light L1 and the focus of the optical receiver F_{OR}, are both focused at a rough, direct reflection, target surface 426. Since the surface 426 is rough, the light L1 may be aimed at a deep valley of the rough surface 426. This may lead to signal loss, and it may give misleading distance measurement results. For example, in Figure 4a, the surveying instrument 100 may determine the distance to the surface 426 to be a distance d3 actually measured in relation to the deep valley of the surface 426.

In Figure 4b, the light L1 has been made slightly divergent, by moving the first focusing lens. Thus, the light L1 illuminates an enlarged area on the surface 426. Thus, light from the enlarged area on the surface 426 may be reflected back toward the surveying instrument 100. The surveying instrument 100 may determine the distance d4 to the surface 426 based on an average of the reflected light, which may limit the negative impact from deep recesses.

Thus, for direct reflection targets or surfaces, expanded and de-focused light L1 may reduce the measurement noise from rough surfaces, especially at close ranges. A de-focused light spot size may be, for example, two, five, or ten times as large as a structure size of a surface. A structure size of a surface may, for example, refer to average dimensions of features or patterns present on the surface. A larger spot size may provide measurements less dependent on local variations in surface structures.

As is illustrated in Figures 4a and 4b, the visual channel, i.e., the optical path of the first optical receiver, can remain focused F_{OR} on the surface 426, to, e.g., provide a sharp image of the surface 426.

With reference to Figure 5, a surveying instrument 500, in accordance with some embodiments, will be described. The surveying instrument 500 may have several features in common with the surveying instrument 100, described above with reference to the preceding Figures. However, to increase legibility of the Figures, some features illustrated in Figure 1 are not present in Figure 5, and vice versa.

Similarly to the surveying instrument 100, illustrated in Figure 1, the surveying instrument 500 of Figure 5 comprises a distance measurement unit 102, a first optical path OP1, and a second optical path OP2. However, the surveying instrument 500 of Figure 5 comprises a plurality of optical receivers 508a, 508b, and 508c. Specifically, the surveying instrument 500 comprises an eyepiece 508a and an imaging device 508b, both connected to the second optical path OP2. A beam splitter 530 splits the second optical path OP2, to guide a first portion of the incoming light L3 to the eyepiece 508a and a second portion of the incoming light L3 to the imaging device 508b. The eyepiece 508a is arranged in a housing of the surveying instrument 500 to allow an operator of the surveying instrument 500 to see along the optical axis OA of the surveying instrument 500. By looking through the eyepiece 508a, the operator may easily and quickly see objects that are within a field of view of the surveying instrument 500, which may facilitate aiming the surveying instrument 500 toward a point of interest. The imaging device 508b may generate an image, or a stream of images, of the field of view of the surveying instrument 500. The image or images may for example be transmitted to a display (not illustrated), which may form part of the surveying instrument or be external to the surveying instrument 500. Further, as described above in relation to preceding Figures, the imaging device 508b, or a processor, may detect and analyze the incoming light L3 to, e.g., determine a sharpness of an image or a turbulence level.

The surveying instrument 500 comprises a second/further optical receiver 508c. The further optical receiver 508c is configured to receive light L4 via a third optical path OP3, including the front lens 110 and the beam splitting unit 512. The beam splitting unit 512 of Figure 5 is therefore configured to split not only the first optical path OP1 from the second optical path OP2, but also to split the third optical path OP3 from the other two optical paths OP1, OP2. The beam splitting unit 512 may comprise one or more beam splitters. The further optical receiver 508c may be a tracker 508c. A tracker 508c may be configured to identify a target or object in the field of view of the surveying instrument 500, and to follow of track a position of the target/object within the field of view of the surveying instrument 500.

As in Figure 1, the first optical path OP1 comprises a first focus adjusting element 513. However, in the embodiment illustrated in Figure 5, the first focus adjusting element 113 is a first adjustable optical element 533. An adjustable optical element 533 may be a first focus adjustable lens 534, as is illustrated in Figure 5, or a phase array.

As in Figure 1, the first focus adjusting element 113 is arranged between the beam splitting unit 512 and the distance measurement unit 102 as a shared/common focusing element 113 for the transmitter 104 and the detector 106 of the distance measurement unit 102.

As in Figure 1, the second optical path OP2 comprises a second focus adjusting element 117. However, in Figure 5, the second focus adjusting element 117 is a second adjustable optical element 535. Similarly to the first adjustable optical element 533, the second adjustable optical element 535 may be an adjustable lens 536, as illustrated in Figure 5, or a phase array. The second adjustable optical element 535 is arranged between the beam splitting unit 512 and the beam splitter 530. The second adjustable optical element 535 is arranged along the second optical path OP2 to adjust a focus or a focal point of the optical receiver 508a and the further optical receiver 508b.

The third optical path OP3 may comprise a third focus adjusting element 528, illustrated in Figure 5 as a third adjustable optical element 537, and specifically a third focus adjustable lens 538. The third focus adjusting element 528 is arranged between the beam splitting unit 512 and the optical receiver 508c to adjust a focus or focal point of the further optical receiver 508c.

An adjustable optical element 533, 535, 537 has an adjustable focal length. Specifically, a focus adjustable lens 534, 536, 538 may have an adjustable shape, wherein the focal length of the adjustable lens may be adjusted by changing a shape of the lens. As another example, an adjustable optical element 533, 535, 537 may be a phase array. The focal length of a phase array may be altered by adjusting the phase of the light transmitted or reflected by the phase array. Specifically, the focal length of an adjustable optical element 533, 535, 537 may be altered without moving the adjustable optical element 533, 535, 537. The first focus adjusting element 113, the second focus adjusting element 117, and the third focus adjusting element 528 may all be separately, or independently adjustable. In other words, the focus of the distance measurement unit 102, the optical receivers 508b and 508c (jointly), and the optical receiver 508c may be independently adjusted. Alternatively, or additionally, two or three of the first focus adjusting element 113, the second focus adjusting element 117, and the third focus adjusting element 528 may be jointly adjusted. For example, the third focus adjusting element 528 may be controllable together with, e.g., the second focus adjusting element 117, such that the tracker 508c and the eyepiece 508a or imaging device 508b maintain a same focus.

A control unit, such as the control unit 118 of Figure 1, may control the first focus adjusting element 113, the second focus adjusting element 117, and/or the third focus adjusting element 528. Specifically, the control unit may, control the first focus adjusting element 113, the second focus adjusting element 117, and/or the third focus adjusting element 528 by, for example, controlling a refractive index, phase, shape, or other optical characteristic of the first focus adjustable lens 534, the second focus adjustable lens 536, and/or the third focus adjustable lens 538, respectively.

The surveying instrument 500 further comprises a user interface device 532. The user interface device 532 may be configured to provide information from the surveying instrument to an operator of the surveying instrument 500. For example, the user interface device 532 may be in communication with an operator device, which may, for example, include a display. The user input device may for example provide measurements made, or images generated, by the distance measurement unit 102, the imaging device 508b, the tracker unit 508c, or the temperature sensor 122 illustrated in Figure 1, to the user.

The user interface device 532 may further be configured to receive user input, such as a desired working distance to an object, or a desired focal length of one of the focus adjusting elements 113, 117, 528. A user input could also indicate whether the distance measurement 102 unit should be focused at the point of interest or not. The user interface device 532 may be in communication with a control unit 118 or a processor 120, as illustrated in Figure 1.

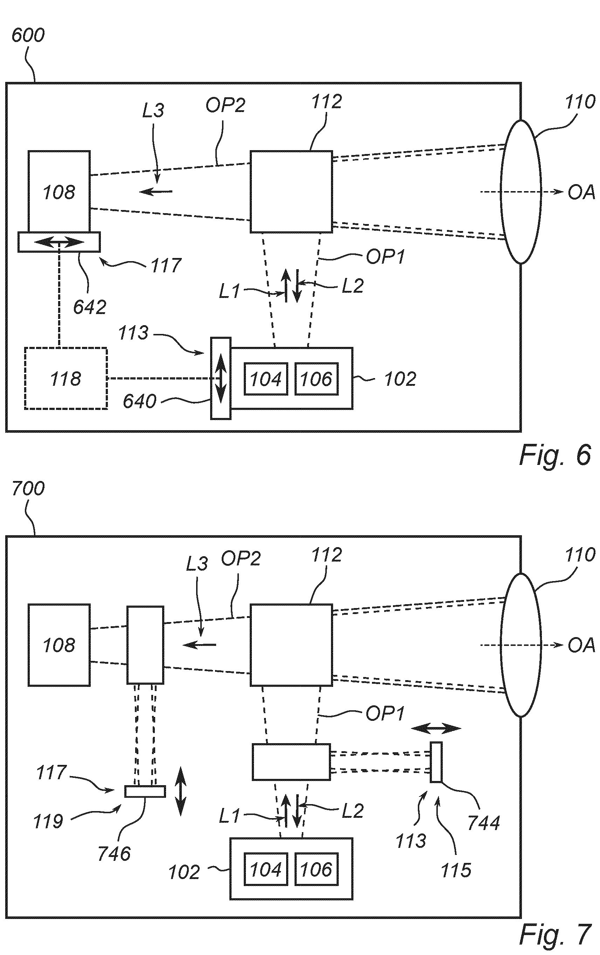

With reference to Figure 6, a surveying instrument 600, in accordance with some embodiments, will be described. The surveying instrument 600 may be equivalent to the surveying instrument 100, described above with reference to Figures 1 to 4, and/or the surveying instrument 500, described above with reference to Figure 5, except in that the first focus adjusting element 113, is a first movable element 640, and the second focus adjusting element 117 is a second movable element 642. The first movable element 640 is configured to move the distance measurement unit 102 to adjust a length of the first optical path OP1. The first movable element 640 may comprise an actuator configured to move the distance measurement unit 102 based on a control signal. As the first movable element 640 moves the distance measurement unit 102 closer to the beam splitting unit 112, the length of the first optical path OP1 may decrease. As the first movable element 640 moves the distance measurement unit 102 further away from to the beam splitting unit 112, the length of the first optical path OP1 may increase.

The second movable element 642 is configured to move the first optical receiver 108 to adjust a length of the second optical path OP2. The second movable element 642 may comprise an actuator configured to move the first optical receiver 108 based on a control signal. As the second movable element 642 moves the first optical receiver 108 closer to the beam splitting unit 112, the length of the second optical path OP2 may decrease. As the second movable element 642 moves the first optical receiver 108 further away from the beam splitting unit 112, the length of the second optical path OP2 may increase.

The control unit 118 of Figure 6 may, similarly to the control unit 118 of Figure 1, control the first focus adjusting element 113 and the second focus adjusting element 117. In the context of Figure 6, the control unit 118 may be configured to control the first movable element 640 to adjust a position of the distance measurement unit 102 to elongate or shorten the first optical path OP1. The control unit 118 may be configured to control the second movable element 642 to adjust a position of the first optical receiver 108 to elongate or shorten the second optical path OP2.

With reference to Figure 7, a surveying instrument 700, in accordance with some embodiments, will be described. The surveying instrument 700 may be equivalent to the surveying instrument 100, described above with reference to Figures 1 to 4, or the surveying instrument 500, described above with reference to Figure 5, except in that the first focus adjusting element 113, which is a first movable optical component 115, is a first movable mirror 744. The second focus adjusting element 117 is a second movable optical component 119 in the form of a second movable mirror 119. Similarly to the movable elements 640, 642 illustrated in Figure 6, the first and second movable mirrors 744, 746 are respectively movable to adjust a length of the first optical path OP1 and the second optical path OP2. The first movable mirror 744 is moveably arranged along the first optical path OP1, such that movement of the first movable mirror 744 may elongate or shorten the first optical path OP1. Thus, movement of the first movable mirror 744 may adjust a focus or a focal point of the distance measurement unit 102, i.e., the transmitter 104 and the detector 106.

The second movable mirror 746 is moveably arranged along the second optical path OP2, such that a movement of the second movable mirror 746 may elongate or shorten the second optical path OP2. Thus, movement of the second movable mirror 746 may adjust a focus or a focal point of the first receiver 108.

The surveying instrument 700 may comprise a control unit, such as the control unit 118 illustrated in Figure 1. The control unit 118 may control the first focus adjusting element 113 and/or the second focus adjusting element 117. The control unit 118 may control a focus of the distance measurement unit 102 by controlling a position of the first movable mirror 744. The control unit 118 may control a focus of the first optical receiver 108 by controlling a position of the second movable mirror 746.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A surveying instrument (100) comprising:
a distance measurement unit (102) comprising a transmitter (104) and a detector (106), wherein the transmitter is configured to emit light (L1) via a first optical path (OP1), and the detector is configured to receive light (L2) via the first optical path; and
a first optical receiver (108) adapted to receive light (L3) via a second optical path (OP2); wherein
the first optical path includes a front lens (110), a beam splitting unit (112), and at least one first focus adjusting element (113) configured to adjust a focus of the distance measurement unit;
the second optical path includes the front lens, the beam splitting unit, and at least one second focus adjusting element (117) configured to adjust a focus of the first optical receiver;
the beam splitting unit is configured to split the first optical path from the second optical path; and
the transmitter and the detector share the first focus adjusting element as a common focus adjusting element.

2. The surveying instrument according to claim 1, wherein the first optical path and the second optical path are coaxial between the front lens and the beam splitting unit.

3. The surveying instrument of any of claims 1 or 2, wherein:
the first focus adjusting element comprises a first movable optical component (115) arranged between the distance measurement unit and the beam splitting unit; and/or
the second focus adjusting element comprises a second movable optical component (119) arranged between the first optical receiver and the beam splitting unit.

4. The surveying instrument according to any one of the preceding claims, wherein:
the first focus adjusting element comprises a first movable element (640), configured to move the distance measurement unit to adjust a length of the first optical path; and/or
the second focus adjusting element comprises a second movable element (642) configured to move the first optical receiver to adjust a length of the second optical path.

5. The surveying instrument according to any one of the preceding claims, wherein:
the first focus adjusting element comprises a first focus adjustable lens (534) arranged between the distance measurement unit and the beam splitting unit; and/or
the second focus adjusting element comprises a second focus adjustable lens (536) arranged between the first optical receiver and the beam splitting unit.

6. The surveying instrument according to any one of the preceding claims, wherein:
the first focus adjusting element comprises a first phase array arranged between the distance measurement unit and the beam splitting unit; and/or
the second focus adjusting element comprises a second phase array arranged between the first optical receiver and the beam splitting unit.

7. The surveying instrument according to any preceding claim, wherein:
the transmitter is configured to emit light via the first optical path onto an object (224, 226), and
the detector is configured to receive a return signal of the emitted light reflected by the object, and
the surveying instrument further comprises a processing unit (120) configured to determine a distance (d1, d2) between the surveying instrument and the object based on the emitted light and the received return signal.

8. The surveying instrument according to any preceding claims, wherein the first optical receiver comprises an eyepiece (508a), an imaging device (508b), or a tracker unit (508c).

9. The surveying instrument according to any preceding claim, further comprising a second optical receiver (508c) adapted to receive light (L4) via a third optical path (OP3), wherein
the third optical path includes the beam splitting unit and the front lens, and
the beam splitting unit (512) is configured to split the third optical path from the first optical path and/or the second optical path.

10. The surveying instrument according to any preceding claim, further comprising a control unit (118) configured to control at least one of the first focus adjusting element and the second focus adjusting element.

11. The surveying instrument according to claim 10, wherein the control unit is configured to control at least one of the first focus adjusting element and the second focus adjusting element based on an input from the distance measurement unit.

12. The surveying instrument according to claim 10 or 11, wherein the first optical receiver is an imaging device, and wherein the control unit is configured to control at least one of the first focus adjusting element and the second focus adjusting element based on an input from the imaging device.

13. The surveying instrument according to any of claims 10 to 12, wherein the control unit is further configured to determine a degree of optical turbulence based on an input received from the first optical receiver, and the control unit is configured to control at least one of the first focus adjusting element and the second focus adjusting element based on the determined degree of optical turbulence.

14. The surveying instrument according to any of claims 10 to 13, wherein the control unit further comprises a temperature sensor (122), and the control unit is configured to control at least one of the first focus adjusting element and the second focus adjusting element based on an input received from the temperature sensor.

15. A computer-implemented method for controlling the surveying instrument of claim 1, the method comprising:
receiving a first input from at least one of the distance measurement unit, the first optical receiver, a temperature sensor, and a user interface device (532), and
controlling at least one of the first focus adjusting element and the second focus adjusting element based on the first input.
